# EUROPÄISCHE PATENTSCHRIFT

(11) **EP 0 554 866 B1**
(45) Veröffentlichungstag und Bekanntmachung des Hinweises auf die Patenterteilung: **03.05.1995**
(21) Anmeldenummer: 93101736.2
(22) Anmeldetag: 04.02.1993
(51) Int. Cl.: F17C 9/02

(54) **Verfahren zum Verdampfen und Anwärmen von flüssigem Wasserstoff, flüssigem Helium oder flüssigem Neon**
Process for evaporating and heating of liquid hydrogen, liquid helium or liquid neon
Procédé d'évaporation et de chauffage d'hydrogène liquide, d'hélium liquide ou de néon liquide

(30) Priorität: 07.02.1992 DE 4203563
(43) Veröffentlichungstag der Anmeldung: 11.08.1993
(73) Patentinhaber: Linde Aktiengesellschaft, 65189 Wiesbaden (DE)
(72) Erfinder: Linde, Hermann, Prof. Dr. rer. nat., W-8023 Pullach (DE); Bracha, Michael, Dipl.-Ing., W-8000 München 71 (DE)
(74) Vertreter: Schaefer, Gerhard, Dr.

(56) Entgegenhaltungen:
- DE-A- 2 407 617
- FR-A- 2 312 724

## Beschreibung

Die Erfindung betrifft ein verfahren zum Verdampfen und Anwärmen von flüssigem Wasserstoff, flüssigem Helium oder flüssigem Neon durch indirekten Wärmetausch mit einem sich dabei abkühlenden Kreislaufmedium eines Primärkreislaufsystems, welches nach seinem Abkühlen verdichtet, erwärmt und arbeitsleistend entspannt wird.

Speziell flüssiger Wasserstoff wird in naher Zukunft als Energieträger an Bedeutung gewinnen, z.B. als Kraftfahrzeug- oder Flugzeugtreibstoff. Bei vielen Anwendungsfällen wird der Wasserstoff aus logistischen und wirtschaftlichen Gründen über weite Entfernungen in flüssiger Form vom Erzeuger zum Verbraucher transportiert, obwohl dieser den Wasserstoff ganz oder teilweise in gasförmiger Form benötigt. Bei Lagerung und Transport des Wasserstoffs in flüssiger Form können die benötigten Lager- bzw. Transportbehälter wesentlich kleiner gehalten werden als dies für gasförmigen Wasserstoff notwendig wäre, da flüssiger Wasserstoff ein weitaus geringeres Volumen besitzt als die gleiche Menge gasförmigen Wasserstoffs.

Daraus ergibt sich die Notwendigkeit, den flüssigen Wasserstoff beim Verbraucher wieder zu verdampfen, was bei den bekannten Verfahren nur unter zusätzlichem Einsatz bzw. Zufuhr von Energie möglich ist.

Dies gilt insbesondere bei großtechnischen Anwendungen, bei denen der Einsatz von luftbeheizten Verdampfern wegen der großen benötigten Austauschflächen und den instabilen Betriebsverhältnissen nicht sinnvoll ist. Derzeit werden einige Wasserstoff-Pilot-Projekte diskutiert, bei denen der Wasserstoff umweltfreundlich mittels regenerativer Energie - meist Wasserkraft - erzeugt, über weite Entfernungen transportiert und im Verbraucherland wieder teilweise verdampft wird. Bei diesen Projekten kommt der Verdampfung des flüssigen Wasserstoffs eine große wirtschaftliche Bedeutung zu.

Aus der DE-OS 24 07 617 ist ein Verfahren zur Energierückgewinnung aus verflüssigten Gasen bekannt, bei dem durch deren Verdampfen im Wärmetausch mit einem sich dabei abkühlenden Kreislaufmedium, welches anschließend verdichtet, erwärmt und arbeitsleistend entspannt wird, die Verflüssigungsenergie aus dem verflüssigten Gas teilweise wiedergewonnen werden kann. Das Kreislaufmedium bleibt bei diesem Verfahren auch bei der tiefsten im Kreislaufsystem erreichten Temperatur gasförmig.

Die Erwärmung des Kreislaufmediums vor seiner arbeitsleistenden Entspannung erfolgt einerseits zu einem großen Teil durch Zufuhr von Fremdwärme und andererseits mittels rekuperativer Erwärmung des Kreislaufmediums mit sich selbst. Andere Verfahren, die heute zur Verdampfung und Anwärmung von flüssigem Wasserstoff eingesetzt werden, beruhen ausschließlich auf der Zufuhr von Fremdwärme. Als Beispiel seien luftbeheizte Verdampfer, Elektroheizungen und Wasserbadanwärmer mit Dampferzeuger - siehe DE-OS 38 37 962 - genannt. Alle diese Verfahren haben jedoch den Nachteil, daß eine auch nur teilweise Rückgewinnung der zur Verflüssigung aufgewendeten Energie nicht möglich ist. Bei der Verwendung von luftbeheizten Verdampfern kann zwar die zur Verdampfung und Anwärmung erforderliche Energie aus der Umgebung "kostenlos" bezogen werden, jedoch ist bei entsprechend großen Anlagen mit einem hohen Flächenbedarf zu rechnen und die austrittsseitige Gastemperatur unterliegt Schwankungen, die aufgrund von Durchsatzänderungen und wechselnden Außentemperaturen bzw. schwankender Luftfeuchtigkeit hervorgerufen werden.

Die Verdampfung und Anwärmung von flüssigem Helium oder flüssigem Neon steht zwar im Augenblick in großtechnischem Maßstab noch nicht zur Diskussion, jedoch wäre auch in diesem Fall, gerade im Hinblick auf die, im Vergleich zum Wasserstoff-Verflüssigungsprozeß, höheren Kosten, ein Verdampfungs- und Anwärmeverfahren mit einer zumindest teilweisen Rückgewinnung der beim Verflüssigen aufgewendeten Energie wünschenswert.

Ziel und Aufgabe der vorliegenden Erfindung ist es deshalb, zumindest einen Teil der beim Verflüssigen des gasförmigen Wasserstoffs, des gasförmigen Heliums und des gasförmigen Neons aufgewendeten Verflüssigungsenergie zurückzugewinnen. Dadurch läßt sich die Gesamtenergiebilanz des aus Verflüssigung, Transport/Speicherung und Wiederverdampfung bestehenden Systems verbessern und somit wirtschaftlicher gestalten.

Diese Aufgabe wird erfindungsgemäß dadurch gelöst, daß das Primärkreislaufmedium zusätzlich zwischen seinem Verdichten und Erwärmen durch indirekten Wärmetausch mit einem sich dabei abkühlenden Kreislaufmedium eines Sekundärkreislaufsystems, welches ebenfalls nach seinem Abkühlen verdichtet, erwärmt und arbeitsleistend entspannt wird, angewärmt wird, wobei das durch indirekten Wärmetausch mit dem Sekundärkreislaufsystem vollzogene Anwärmen des Primärkreislaufmediums an einem Punkt erfolgt, an dem die Temperatur des Primärkreislaufmediums unterhalb der Umgebungstemperatur liegt.

Das Anwärmen des im Primärkreislaufsystems zirkulierenden Primärkreislaufmediums erfolgt also in zwei Stufen, nämlich durch einen indirekten Wärmetauschprozeß an einem Punkt des Primärkreislaufsystems, an dem die Temperatur des Primärkreislaufmediums unterhalb der Umgebungstemperatur liegt und durch einen Wärmetauschprozeß an einem Punkt des Primärkreislaufsystems, an dem die Temperatur des Primärkreislaufmediums oberhalb der Umgebungstemperatur liegt.

So wird im Falle des Verdampfens von flüssigem Wasserstoff die Kälte des flüssigen Wasserstoffs genutzt, da die beiden Kreislaufsysteme mit wesentlich höheren thermischen Wirkungsgraden arbeiten als vergleichbare konventionelle Gaskreislaufsysteme, wodurch auf indirektem Wege ein Teil der zur Verflüssigung des Wasserstoffs eingesetzten Energie wieder zurückgewonnen werden kann. Zusätzlich kann die Energie eingespart werden, die bei anderen Prozessen zum Verdampfen und Anwärmen des Wasserstoffs aufgebracht und somit als reine Verlustenergie angesehen werden muß.

Weitere Ausgestaltungen des erfindungsgemäßen Verfahrens sind dadurch gekennzeichnet, daß als Kreislaufmedien für den Primär- sowie Sekundärkreislauf Helium, Neon oder Wasserstoff verwendet werden, wobei für den Sekundärkreislauf auch eine Verwendung von Stickstoff Sinn macht. Selbstverständlich erfüllen neben den genannten Medien noch weitere, dem Fachmann bekannte Stoffe die notwendigen Voraussetzungen, um als Kreislaufmedien Verwendung finden zu können.

Eine vorteilhafte Weiterbildung der Erfindung zeichnet sich dadurch aus, daß die Kreislaufmedien an jedem Punkt des Primär- und des Sekundärkreislaufsystems einen Druck aufweisen, der über ihrem kritischen Druck liegt.

Hierbei handelt es sich bei Helium, Stickstoff und Neon um sichere Inertgase. Darüber hinaus besitzt Helium zusätzlich den Vorteil, daß es während des gesamten Prozesses gasförmig bleibt. Weisen die Kreislaufmedien an jedem Punkt des Primär- bzw. des Sekundärkreislaufsystems einen Druck auf, der über ihrem kritischen Druck liegt, so kann man bei der Prozeßauslegung auf einen "kalten" Verdichter verzichten und stattdessen eine hinsichtlich Betriebs- und Investitionskosten günstigere Kolbenpumpe verwenden. Aus Sicherheitsgründen sollten jedoch bei der Verwendung von Wasserstoff als Kreislaufmedium die Wasserstoffturbinen aufgrund der hohen Drücke und Temperaturen in Inertgas-gespülten Boxen untergebracht werden.

Im Interesse eines guten Wirkungsgrades sollten ferner Turbineneintrittsdruck und -temperatur sowohl des Primär- als auch des Sekundärkreislaufsystems möglichst hoch gewählt werden. Die Verfügbarkeit geeigneter Maschinen und entsprechend notwendige Sicherheitsbetrachtungen setzen dieser Forderung jedoch Grenzen.

Eine weitere Ausgestaltung des erfindungsgemäßen Verfahrens ist dadurch gekennzeichnet, daß das Anwärmen des Primärkreislaufsystems neben dem Anwärmen durch das Sekundärkreislaufsystem und das Anwärmen des Sekundärkreislaufsystems durch Fremdwärme erfolgt, die mittels Dampf, Solarenergie oder Wasserstoffverbrennung erzeugt wird.

Auch hier gilt jedoch, daß dem Fachmann noch weitere Möglichkeiten bekannt sind, mittels derer, entsprechend den gegebenen Bedingungen, ein Anwärmen sowohl des Primär- als auch des Sekundärkreislaufsystems auf die zweckmäßigste Art und Weise erfolgen kann.

Hierbei empfiehlt es sich in vorteilhafter Weise, daß der zum Anwärmen verwendete Wasserstoffbrenner bzw. Dampferzeuger mit einem Teilstrom des angewärmten und verdampften Wasserstoffs gespeist wird. Dadurch wird die für den Wasserstoffbrenner bzw. Dampferzeuger benötigte Energie direkt aus dem am Verfahren beteiligten Gas gewonnen und muß nicht über Fremdmedien wie elektrische Energie oder Heizgas bezogen werden.

Der Einsatz von Solarenergie ist selbstverständlich in erster Linie von klimatischen Bedingungen sowie den Investitionskosten abhängig, so daß der Einsatz dieser Energiequelle im Augenblick nur in den wenigsten Fällen Sinn macht.

Die Erfindung sowie weitere Einzelheiten der Erfindung werden im folgenden anhand zweier schematisch dargestellter Ausführungsbeispiele sowie einer Tabelle erläutert. In den Figuren besitzen identische Anlagenteile gleiche Bezugszeichen.

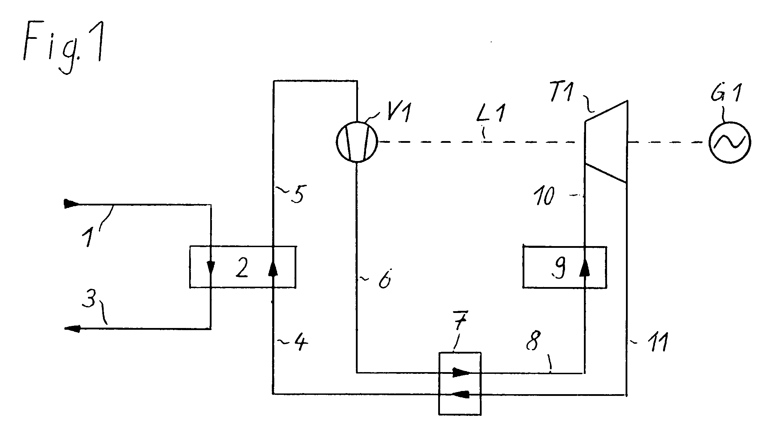

**Figur 1** zeigt den Stand der Technik, wie er z.B. in der DE-OS 24 07 617 beschrieben ist. Hierbei erfolgt das Verdampfen und Anwärmen des flüssigen Wasserstoffs durch indirekten Wärmetausch mit einem sich dabei abkühlenden Kreislaufmedium, welches anschließend verdichtet, erwärmt und arbeitsleistend entspannt wird.

Über Leitung 1 wird tiefkalter flüssiger Wasserstoff durch den Wärmetauscher 2 geführt, in ihm im Gegenstrom mit dem abkühlendem Kreislaufmedium verdampft, auf Umgebungstemperatur erwärmt und anschließend über Leitung 3 aus der Anlage abgeführt. Da in der Regel der gasförmige Wasserstoff mit einem entsprechend hohen Druck in ein Gasnetz eingespeist wird, sollte die dazu notwendige Verdichtung mittels einer Flüssig-Wasserstoff-Pumpe bereits vor dem Anwärmen und Verdampfen erfolgen, da auf diese Weise die notwendige Verdichtung energetisch vorteilhaft bei tiefen Temperaturen erfolgt.

Über Leitung 4 wird das Kreislaufmedium in den Wärmetauscher 2 geführt und in ihm im Gegenstrom zu verdampfendem Wasserstoff abgekühlt. Das Kreislaufmedium wird anschließend über Leitung 5 einem Verdichter V1 zugeführt. Das verdichtete Kreislaufmedium wird sodann über Leitung 6 einem Wärmetauscher 7 zugeführt und in ihm rekuperativ im Gegenstrom zu abzukühlendem Kreislaufmedium aus Leitung 11 erwärmt. Über Leitung 8 wird das Kreislaufmedium einem Anwärmer 9 zugeführt und in ihm mittels Fremdwärme auf die gewünschte Prozeßtemperatur angewärmt. Das angewärmte Kreislaufmedium wird über Leitung 10 Turbine T1 zugeführt. In der Turbine T1, die mit dem Verdichter V1 sowie Generator G1 verbunden ist - dies ist durch die gestrichelt gezeichnete Verbindung L1 angedeutet -, erfolgt eine arbeitsleistende Entspannung des angewärmten Kreislaufmediums, das sodann über Leitung 11 Wärmetauscher 7 zugeführt, in ihm rekuperativ im Gegenstrom zu angewärmten Kreislaufmedium in Leitung 6 abgekühlt und anschließend, wie bereits beschrieben, über Leitung 4 wiederum Wärmetauscher 2 zugeführt wird.

Aus **Tabelle 1** sind Temperaturen und Drücke, wie sie beispielsweise in den in **Figur 1** dargestellten Leitungen herrschen, zu entnehmen.

**Tabelle 1**

| **Leitung** | **Temperatur [K]** | **Druck [bar]** |
|---|---|---|
| 1 | 20 | 50,0 |
| 3 | 300 | 49,4 |
| 4 | 310 | 13,4 |
| 5 | 33 | 13,0 |
| 6 | 72 | 140,0 |
| 8 | 280 | 139,8 |
| 10 | 800 | 138,8 |
| 11 | 513 | 13,6 |

Bei einer zu verdampfenden flüssigen Wasserstoff-Menge von 1 mol/s - dies entspricht etwa 104 l flüssigen Wasserstoffs pro Stunde - bedarf es, unter der Voraussetzung, daß als Kreislaufmedium Wasserstoff mit einem Durchsatz von 1,18 mol/s verwendet wird, einer Verdichterleistung von 1041 W sowie 18065 W an Fremdwärme, die über den Anwärmer 9 dem Kreislaufmedium zugeführt werden. Die erzielbare Turbinenleistung beträgt in diesem Falle 10 182 W, wobei sowohl für den Verdichter als auch die Turbine ein Wirkungsgrad von 75 % angenommen wurden. Der Gesamtwirkungsgrad des Prozesses, der sich aus der Differenz zwischen erzielbarer Turbinenleistung und aufzuwendender Verdichterleistung, geteilt durch die zuzuführende Fremdwärme ergibt, beträgt 0,506.

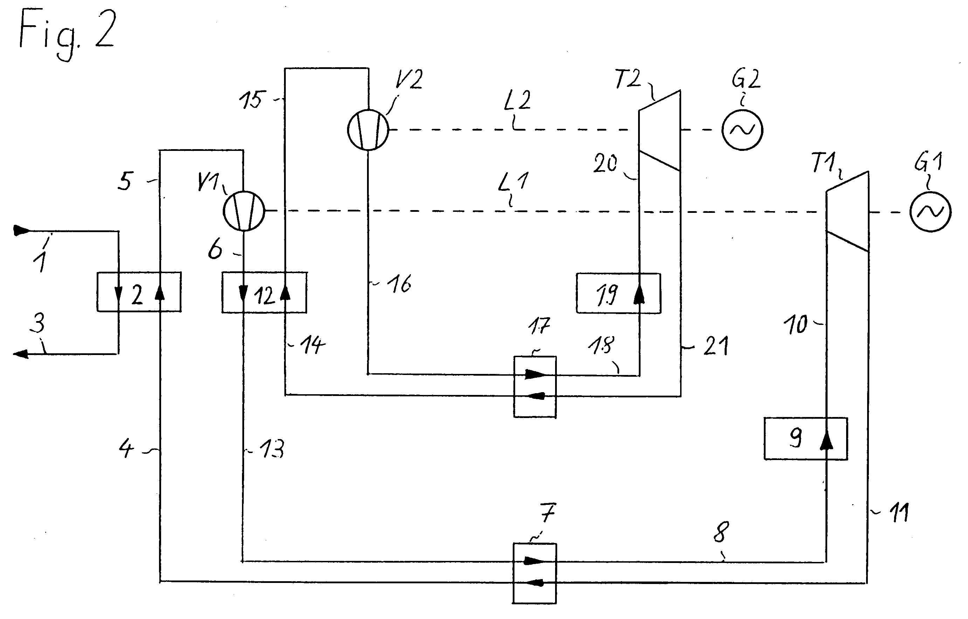

**Figur 2** zeigt das erfindungsgemäße Verfahren, wobei wiederum über Leitung 1 tiefkalter flüssiger Wasserstoff durch Wärmetauscher 2 geführt und in ihm im Gegenstrom zu abzukühlendem Primärkreislaufmedium verdampft und auf Umgebungstemperatur angewärmt wird. Das über Leitung 4 dem Wärmetauscher 2 zugeführte Kreislaufmedium des Primärkreislaufsystems wird nach Durchströmen des Wärmetauschers 2 über4Leitung 5 einem Verdichter V1, der analog zu der in Figur 1 dargestellten Verfahrensweise wiederum mit einer Turbine T1 sowie einem Generator G1 gekoppelt ist, zugeführt. Das verdichtete Kreislaufmedium wird nun über Leitung 6 einem Wärmetauscher 12 zugeführt und in ihm im Gegenstrom zu abzukühlendem Sekundärkreislaufmedium aus Leitung 14 erwärmt. Anschließend wird das Primärkreislaufmedium über Leitung 13 Wärmetauscher 7 zugeführt, in ihm rekuperativ im Gegenstrom zu abzukühlendem Primärkreislaufmedium in Leitung 11 erwärmt und anschließend über Leitung 8 Anwärmer 9 zugeführt. Im Anwärmer 9 erfolgt ein Anwärmen des Primärkreislaufmediums auf die gewünschte Temperatur. Das angewärmte Kreislaufmedium wird über Leitung 10 der Turbine T1 zugeführt, in ihr arbeitsleistend entspannt und verläßt Turbine T1 über Leitung 11. Im Wärmetauscher 7 erfolgt sodann ein rekuperatives Abkühlen des Primärkreislaufmediums.

Das zum Anwärmen des Primärkreislaufmediums benötigte Sekundärkreislaufmedium wird über Leitung 14 in den Wärmetauscher 12 geführt und anschließend über Leitung 15 Verdichter V2 zugeführt. Dieser ist wiederum analog zu Verdichter V1 mit Turbine T2 und Generator G2 gekoppelt. Das verdichtete Sekundärkreislaufmedium wird über Leitung 16 Wärmetauscher 17 zugeführt, in ihm rekuperativ im Gegenstrom zu abzukühlendem Sekundärkreislaufmedium aus Leitung 21 angewärmt und anschließend Anwärmer 19 zugeführt. In ihm wird es auf die gewünschte Temperatur angewärmt, sodann über Leitung 20 Turbine T2 zugeführt und in ihr arbeitsleistend entspannt. Das entspannte Kreislaufmedium wird über Leitung 21 wiederum Wärmetauscher 17 zugeführt, in ihm rekuperativ im Gegenstrom zu anzuwärmenden Kreislaufmedium in Leitung 16 abgekühlt und anschließend über Leitung 14 Wärmetauscher 12 zugeführt.

Aus **Tabelle 2** sind Temperaturen und Drücke, wie sie beispielsweise in den in **Figur 2** dargestellten Leitungen herrschen, zu entnehmen.

**Tabelle 2**

| **Leitung** | **Temperatur [K]** | **Druck [bar]** |
|---|---|---|
| 1 | 20 | 50,0 |
| 3 | 300 | 49,4 |
| 4 | 310 | 13,4 |
| 5 | 33 | 13,0 |
| 6 | 72 | 140,0 |
| 13 | 270 | 139,0 |
| 8 | 472 | 138,8 |
| 10 | 800 | 137,8 |
| 11 | 514 | 13,6 |
| 14 | 280 | 35,8 |
| 15 | 129 | 35,4 |
| 16 | 213 | 230,0 |
| 18 | 589 | 229,8 |
| 20 | 1000 | 228,8 |
| 21 | 712 | 36,0 |

Unter der Annahme, daß die zu verdampfende Wasserstoffmenge 1 mol/s beträgt, die Durchflußmenge des Primärkreislaufsystems 1,18 mol/s Wasserstoff und die Durchflußmenge des Sekundärkreislaufsystems 1,10 mol/s Stickstoff beträgt, errechnet sich der Gesamtwirkungsgrad des erfindungsgemäßen Verfahrens zu 0,657. Dies resultiert aus den aufzuwendenden Verdichterleistungen, nämlich 1041 W bzw. 2536 W für den Verdichter V1 bzw. V2, die über die Anwärmer 9 bzw. 19 zugeführte Fremdwärme mit 11 400 W bzw. 14 582 W und die erzielten Turbinenleistungen in den Turbinen T1 bzw. T2 mit 10 159 W bzw. 10 484 W. Auch in diesem Fall wurden die Wirkungsgrade der Verdichter und Turbinen wiederum mit 75 % angenommen. Gegenüber einem konventionellen Gaskreisprozeß erreicht das erfindungsgemäße Verfahren somit Wirkungsgrade, die mit denen einer Brennstoffzelle vergleichbar sind.

## Patentansprüche

1. Verfahren zum Verdampfen und Anwärmen von flüssigem Wasserstoff, flüssigem Helium oder flüssigem Neon durch indirekten Wärmetausch mit einem sich dabei abkühlenden Kreislaufmedium eines Primärkreislaufsystems, welches nach seinem Abkühlen verdichtet, erwärmt und arbeitsleistend entspannt wird, **dadurch gekennzeichnet**, daß das Primärkreislaufmedium zusätzlich zwischen seinem Verdichten und Erwärmen durch indirekten Wärmetausch mit einem sich dabei abkühlenden Kreislaufmedium eines Sekundärkreislaufsystems, welches ebenfalls nach seinem Abkühlen verdichtet, erwärmt und arbeitsleistend entspannt wird, angewärmt wird, wobei das durch indirekten Wärmetausch mit dem Sekundärkreislaufsystem vollzogene Anwärmen des Primärkreislaufmediums an einem Punkt erfolgt, an dem die Temperatur des Primärkreislaufmediums unterhalb der Umgebungstemperatur liegt.

2. Verfahren nach Anspruch 1, dadurch gekennzeichnet, daß als Kreislaufmedium für den Primärkreislauf Helium, Neon oder Wasserstoff verwendet wird.

3. Verfahren nach Anspruch 1 oder 2, dadurch gekennzeichnet, daß als Kreislaufmedium für den Sekundärkreislauf Helium, Stickstoff, Neon oder Wasserstoff verwendet wird.

4. Verfahren nach Anspruch 1 bis 3, dadurch gekennzeichnet, daß die Kreislaufmedien an jedem Punkt des Primär- und des Sekundärkreislaufsystems einen Druck aufweisen, der über ihrem kritischen Druck liegt.

5. Verfahren nach Anspruch 1 bis 4, dadurch gekennzeichnet, daß das Anwärmen des Primärkreislaufsystems neben dem Anwärmen durch das Sekundärkreislaufsystem und das Anwärmen des Sekundärkreislaufsystems durch Fremdwärme mittels Dampf, Solarenergie oder Wasserstoffverbrennung erfolgt.

6. Verfahren nach Anspruch 5, dadurch gekennzeichnet, daß der zum Anwärmen verwendete Wasserstoff-Brenner bzw. Dampferzeuger mit einem Teilstrom des verdampften Wasserstoffs gespeist werden.

## Claims

1. Process for vaporization and heating of liquid hydrogen, liquid helium or liquid neon by indirect exchange of heat with a thereby cooled circulating medium of a primary circuit system which after its cooling is compressed, heated and allowed to expand performing work, characterised in that in addition between its compression and heating the primary circulating medium is heated by indirect exchange of heat with a thereby cooled circulating medium of a secondary circuit system which after its cooling is also compressed, heated and allowed to expand performing work, the heating of the primary circulating medium accomplished by indirect exchange of heat with the secondary circuit system being effected at a point at which the temperature of the primary circulating medium lies below the ambient temperature.

2. Process according to claim 1, characterised in that helium, neon or hydrogen is used as the circulating medium for the primary circuit.

3. Process according to claim 1 or 2, characterised in that helium, nitrogen, neon or hydrogen is used as the circulating medium for the secondary circuit.

4. Process according to claim 1 to 3, characterised in that at every point in the primary and secondary circuit system the circulating media exhibit a pressure which lies above their critical pressure.

5. Process according to claim 1 to 4, characterised in that in addition to the heating by the secondary circuit system the heating of the primary circuit system and the heating of the secondary circuit system are effected by outside heat by means of steam, solar energy or hydrogen combustion.

6. Process according to claim 5, characterised in that the hydrogen burner or steam generator used for heating is fed with a partial stream of the vaporised hydrogen.

## Revendications

1. Procédé d'évaporation et de réchauffage d'hydrogène liquide, d'hélium liquide ou de néon liquide, par échange thermique indirect avec un fluide circulant d'un circuit primaire se refroidissant à cette occasion, lequel est, après son refroidissement, comprimé, réchauffé et détendu en générant du travail, caractérisé en ce que le fluide du circuit primaire est de plus réchauffé entre sa compression et son réchauffage par échange thermique indirect avec un fluide circulant d'un circuit secondaire se refroidissant à cette occasion, lequel est également après son refroidissement comprimé, réchauffé et détendu en générant du travail, le réchauffage du fluide du circuit primaire effectué par échange thermique indirect avec le circuit secondaire ayant lieu en un point, où la température du fluide du circuit primaire est inférieure à la température de changement d'état.

2. Procédé selon la revendication 1, caractérisé en ce qu'on utilise en tant que fluide du circuit primaire de l'hélium, du néon ou de l'hydrogène.

3. Procédé selon la revendication 1 ou 2, caractérisé en ce qu'on utilise en tant que fluide du circuit secondaire de l'hélium, de l'azote, du néon ou de l'hydrogène.

4. Procédé selon l'une quelconque des revendication 1 à 3, caractérisé en ce que les fluides de circuit présentent, en chaque point des circuits primaire et secondaire, une pression qui est supérieure à leur pression critique.

5. Procédé selon l'une quelconque des revendications 1 à 4, caractérisé en ce que le réchauffage du circuit primaire, autre que le réchauffage par le circuit secondaire, ainsi que le réchauffage du circuit secondaire, ont lieu au moyen de chaleur externe, la chaleur externe étant produite par vapeur, énergie solaire ou combustion d'hydrogène.

6. Procédé selon la revendication 5, caractérisé en ce que le brûleur à hydrogène ou générateur de vapeur utilisé pour le réchauffage est alimenté par une partie du courant de l'hydrogène évaporé.
